# EUROPÄISCHE PATENTSCHRIFT

(11) **EP 0 833 473 B1**
(45) Veröffentlichungstag und Bekanntmachung des Hinweises auf die Patenterteilung: **17.11.2004**
(21) Anmeldenummer: 97116821.6
(22) Anmeldetag: 26.09.1997
(51) Int. Cl.: H04J 14/02

(54) **Anordnung zur Durchführung eines Add/Drop-Verfahrens im Wellenlängenmultiplex übertragenen optischen Leistungen**
Device for realising an Add/Drop method of optical powers transmitted in wavelength-multiplex
Dispositif pour réaliser une méthode d'insertion/extraction de puissances optiques transmises par des ondes multiplexées

(30) Priorität: 30.09.1996 DE 19640382
(43) Veröffentlichungstag der Anmeldung: 01.04.1998
(73) Patentinhaber: Infineon Technologies AG, 81669 München (DE)
(72) Erfinder: Meekers, Bart, 3721 Kortessem (BE); März, Reinhard, 81667 München (DE)
(74) Vertreter: Müller, Wolfram Hubertus, Dipl.-Phys.

(56) Entgegenhaltungen:
- EP-A- 0 637 879
- EP-A- 0 687 085
- US-A- 5 351 317

## Beschreibung

Zur besseren Ausnutzung der Bandbreite optischer Fasern und anderer Wellenleiter werden Wellenlängenmultiplextechniken verwendet. Um in einer Ringstruktur auf einen der verschiedenen Wellenlängenkänale zugreifen zu können muß die auf diesem einen Kanal übertragene und beispielsweise Nachrichten- oder Signalinformation tragende optische Leistung im wesentlichen entfernt (dropped) werden. Der Kanal, von dem die optische Leistung entfernt worden ist, kann mit neuer optischer Leistung belegt (added) werden, die beispielsweise Nachrichten- oder Signalinformation enthalten kann. Dieses Verfahren der Entfernung optischer Leistung aus einem Kanal und Wiederbelegung dieses optischen Kanals ist als Add/Drop-Verfahren bekannt.

Es gibt verschiedene Möglichkeiten zur Realisierung eines derartigen Add/Drop-Verfahrens:
a) Die auf den verschiedenen Wellenlängenkanälen im Wellenlängenmultiplex übertragenen optischen Leistungen werden Wellenlängendemultiplext, das Add/Drop-Verfahren mit Hilfe einer geeigneten Wellenleiterstruktur ausgeführt und danach die optischen Leistungen einschließlich der einen Kanal neu belegenden optischen Leistung wieder gemultiplext,
b) es wird eine passives optisches Add/Drop-Filter, beispielsweise ein Mach-Zehnder-Interferometer, das beispielsweise aus planaren Quarzglaswellenleitern bestehen kann, verwendet.

Ein nach dem vorangehenden Verfahren a) arbeitender Demultiplexer/Multiplexer ist beispielsweise aus der EP 0 687 085 A1 bekannt.

Bei Übertragungssystemen, bei denen keine feste Kanalzuordnung besteht, müssen einstell- bzw. abstimmbare Wellenleiterstrukturen oder Filter verwendet werden. Dies kann im Fall a) dadurch erreicht werden, daß das Add/Drop-Verfahren mit Hilfe eines Arrays aus optischen Schaltern realisiert wird, aus dem die Wellenleiterstruktur besteht oder das zusätzlich zur Wellenleiterstruktur vorhanden ist. Im Fall b) wird das Verfahren mit Hilfe eines einstell- bzw. abstimmbaren Add/Drop-Filters durchgeführt.

Das einstellbare Add/Drop-Filter ist eine Schlüsselkomponente für Wellenlängenmultiplex-Netzwerke (WDM-Netzwerke). Diese Komponente ermöglicht die Umschaltung der logischen WDM-Netzwerk-Topologie ohne Änderung der physischen Topologie. Diese Eigenschaft kann zur Umleitung im Falle eines Ausfalls an Knoten oder einer Verbindung, der zeitweiligen Vergrößerung der Kapazität zwischen zwei Punkten, indem dieser Verbindung mehrere Kanäle zugeteilt werden, zur Anpassung des Netzwerks an die Erfordernisse des Anwenders auf Softwarebasis und/oder zur Herstellung zeitlich unbelegter Kanäle zwischen zwei Einrichtungen mit optischen Schnittstellen verwendet werden.

Beim Einstellen oder Abstimmen eines herkömmlichen optischen Add/Drop-Bausteins zum Auffinden des gewünschten Wellenlängenkanals werden alle zwischen dem bisher eingestellten Kanal und dem aufzufindenden neuen Kanal eine gewisse Zeit lang gestört. Dadurch wird die Kommunikation unterbrochen und die Anwendung einstell- bzw. abstimmbarer passiver Add/Drop-Einrichtungen impraktikabel.

Bei der im Anspruch 1 angegebenen erfindungsgemäßen Anordnung besteht vorteilhafterweise die Möglichkeit, ein Add/Drop-Verfahren bei ununterbrochener Kommunikation durchzuführen.

Eine besonders vorteilhafte und bevorzugte Ausgestaltung der erfindungsgemäßen Anordnung ist im Anspruch 3 angegeben. Bei dieser Anordnung besteht der besondere Vorteil, daß ein Add/Drop-Verfahren im wesentlichen ohne Störung der Wellenlängenkanäle durchgeführt werden kann. Ein Verfahren zum Betrieb dieser Anordnung zur Durchführung eines die Kanäle im wesentlichen ungestört lassenden Add/Drop-Verfahrens ist im Anspruch 5 angegeben.

Bei der im Anspruch 4 angegeben erfindungsgemäßen Anordnung tritt zwar bei Durchführung eines Add/Drop-Verfahrens eine zeitweilige Dämpfung in gewissen Kanälen auf, jedoch wird vorteilhafterweise dadurch die Kommunikation unterbrochen und es besteht der Vorteil des im Vergleich zur Anordnung nach Anspruch 3 einfachere Aufbaus. Ein Verfahren zum Betrieb dieser Anordnung nach Anspruch 4 zur Durchführung eines gewisse Kanäle dämpfenden aber die Kommunikation nicht unterbrechenden Add/Drop-Verfahrens ist im Anspruch 6 angegeben. Nach diesem Verfahren können generell die auch die Anordnungen nach Anspruch 1 und 2 und auch die Anordnung nach Anspruch 3 so betrieben werden, daß ein Add/Drop-Verfahren zwar mit einer Dämpfung gewisser Kanäle aber ohne Unterbrechung der Kommunikation durchgeführt werden kann.

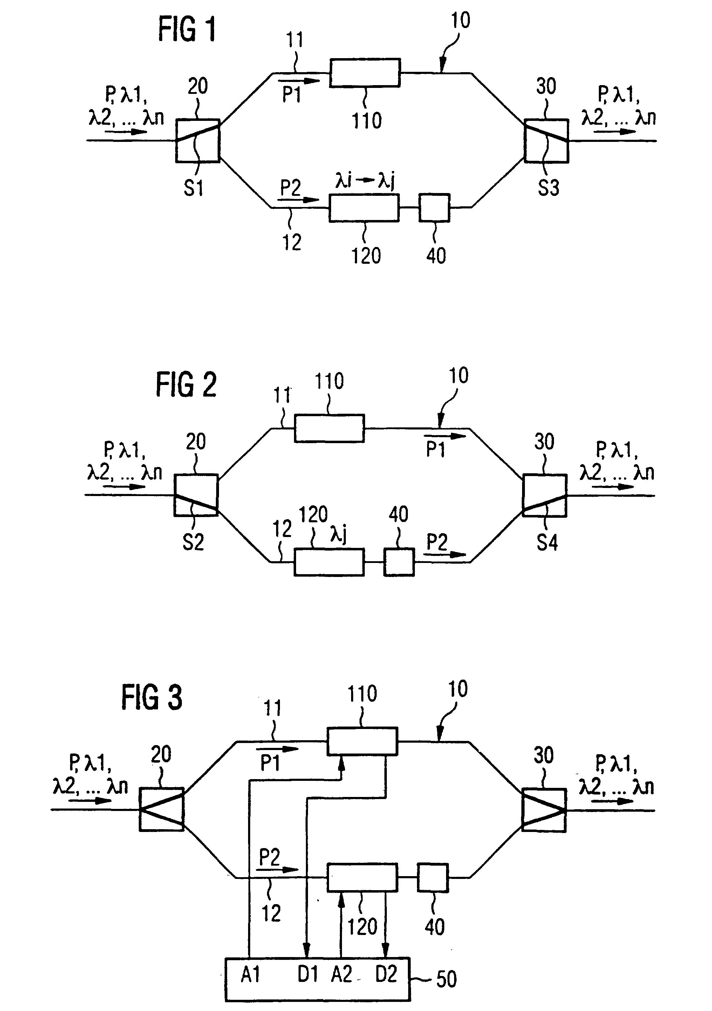

Die im Anspruch 2 angegebene Anordnung ist generell vorteilhaft, für die Anordnung nach Figur 3 sogar Vorraussetzung.

Die Erfindung wird in der nachfolgenden Beschreibung an Hand der Figuren beispielhaft näher erläutert. Es zeigen in jeweils schematischer Darstellung:
- Figur 1: eine erfindungsgemäße Anordnung mit umschaltbarer Teilereinrichtung und umschaltbarer Überlagerungseinrichtung in einem ersten Schaltzustand,
- Figur 2: die Anordnung nach Figur 1 in einem anderen Schaltzustand,
- Figur 3: eine erfindungsgemäße Anordnung mit fester Teilereinrichtung und fester Überlagerungseinrichtung und

Die in den Figuren 1 bis 3 dargestellten erfindungsgemäßen Anordnungen dienen zur Durchführung eines Add/Drop-Verfahrens bei auf verschiedenen optischen Wellenlängenkanälen λ1 bis λn im Wellenlängenmultiplex übertragenen optischen Leistungen P, bei welchem Verfahren die auf jedem Wellenlängenkanal λ1, λ2, ... bzw. λn (n ist eine beliebige natürliche Zahl) übertragene optische Leistung P aus diesem Kanal λ1, λ2, ... bzw. λn im wesentlichen entfernbar und dieser Kanal λ1, λ2, ... bzw. λn mit einer auf ihm zu übertragenden optischen Leistung P belegbar ist.

Jede der Anordnungen nach den Figuren 1 bis 3 weist eine optische Interferometereinrichtung 10 auf, die aus einer optischen Teilereinrichtung 20, zwei Interferometerarmen 11 und 12 und einer optischen Überlagerungseinrichtung 30 besteht.

Die Teilereinrichtung 20 empfängt die auf den verschiedenen Wellenlängenkanälen λ1 bis λn übertragenen optischen Leistungen P und erzeugt von der empfangenen optische Leistung P jedes Kanals λ1, λ2, ... bzw. λn zwei Leistungsanteile P1 und P2.

Einer der beiden Leistungsanteile P1 und P2 der optischen Leistung P jedes Kanals λ1, λ2, ... bzw. λn, beispielsweise der Leistungsanteil P1, ist in einen der beiden Interferometerarme 11 und 12, beispielsweise den Arm 11 eingekoppelbar, auf diesem einen Arm 11 übertragbar und aus diesem Arm 11 ausgekoppelbar und der andere Leistungsanteil, im Beispiel der Leistungsanteil P2 der optischen Leistung P jedes Kanals λ1, λ2, ... bzw. λn ist in den anderen Interferometerarm, im Beispiel den Arm 12 eingekoppelbar, auf diesem anderen Arm 12 übertragbar und aus diesem anderen Arm 12 ausgekoppelbar.

In der Überlagerungseinrichtung 30 werden aus den Interferometerarmen 11 und 12 ausgekoppelte Leistungsanteile P1 bzw. P2 einander überlagert.

In dem einen Interferometerarm 11 ist erfindungsgemäß eine Add/Drop-Einrichtung 110 angeordnet, die wahlweise auf jeden der Wellenlängenkanäle λ1 bis λn einstellbar ist und mit welcher der auf diesem einen Arm 11 und dem eingestellten Kanal λ1, λ2, ... bzw. λn übertragene eine Leistungsanteil P1 vor dessen Auskopplung aus diesem Arm 11 im wesentlichen aus diesem Arm 11 entfernbar ist und ein Leistungsanteil P1 einer auf diesem eingestellten Kanal λ1, λ2, ... bzw. λn zu übertragenden optischen Leistung P in diesen einen Arm 11 einkoppelbar, auf diesem Arm 11 übertragbar und aus diesem Arm 11 in die Überlagerungseinrichtung 30 auskoppelbar ist (Add/Drop-Verfahren).

Auch in dem anderen Interferometerarm 12 ist erfindungsgemäß eine Add/Drop-Einrichtung 120 angeordnet, die wahlweise auf jeden der Wellenlängenkanäle λ1, λ2, ... bzw. λn einstellbar ist und mit welcher der auf diesem anderen Arm 12 und dem eingestellten Kanal λ1, λ2, ... bzw. λn übertragene Leistungsanteil P2 vor dessen Auskopplung im wesentlichen aus diesem anderen Arm 12 entfernbar ist und ein Leistungsanteil P2 einer auf diesem eingestellten Kanal λ1, λ2, ... bzw. λn zu übertragenden optischen Leistung P in diesen anderen Arm 12 einkoppelbar, auf diesem anderen Arm 12 übertragbar und aus diesem anderen Arm 12 in die Überlagerungseinrichtung 30 auskoppelbar ist.

Eine Phasendifferenz-Erzeugungseinrichtung 40 erzeugt eine Phasendifferenz Δϕ zwischen dem aus dem einen Interferometerarm 11 in die Überlagerungseinrichtung 30 auszukoppelnden Leistungsanteil P1 eines Kanals λ1, λ2, ... bzw. λn und dem aus dem anderen Interferometerarm 12 in die Überlagerungseinrichtung 30 auszukoppelnden Leistungsanteil P2 dieses Kanals λ1, λ2, ... bzw. λn derart, daß die in der Überlagerungseinrichtung 30 einander überlagerten Leistungsanteile P1 und P2 konstruktiv miteinander interferieren.

Das Interferometer 10 ist vorzugsweise ein Mach-Zehnder-Interferometer, die dem die Phasendifferenz-Erzeugungseinrichtung 40 bereits Bestandteil des Interferometers 10 ist. Die Add/Drop-Einrichtungen 110 und 120 sollen im Bereich der Kanäle λ1 bis λn möglichst phasenunabhängig arbeiten. Die Teilereinrichtung 20 und die Überlagerungseinrichtung 30 sollten im Bereich der Kanäle λ1 bis λn möglichst wellenlängenunabhängig arbeiten. Dies gilt insbesondere auch für die umschaltbare Teilereinrichtung 20 und die Überlagerungseinrichtung 30.

Zweckmäßig ist eine steuerbare Phasendifferenz-Erzeugungseinrichtung 40, die eine kontinuierlich einstellbare Phasendifferenz Δϕ zwischen einem aus dem einen Interferometerarm 11 in die Überlagerungseinrichtung 30 ausgekoppelten Leistungsanteil P1 und einem aus dem anderen Interferometerarm 12 in die Überlagerungseinrichtung 30 ausgekoppelten Leistungsanteil P2 aufweist.

Die der Teilereinrichtung 20 zugeführte optische Leistung P kann von Kanal zu Kanal differieren, allerdings nur innerhalb eines vorgebbaren zulässigen Toleranzbereichs. Entsprechend können die Leistungsanteile P1 und P2 von Kanal zu Kanal differieren. Auch ein anstelle eines aus einem Interferometerarm 11 oder 12 entfernten Leistungsanteils P1 bzw. P2 tretender und wieder in diesen Arm 11 bzw. 12 eingekoppelter Leistungsanteil P1 bzw. P2, kann innerhalb des zulässigen Toleranzbereichs vom entfernten Leistungsanteil P1 bzw. P2 verschieden sein. Der den entfernten entfernten Leistungsanteil P1 bzw. P2 erstetzender Leistungsanteil P1 bzw. P2 kann wie dieser Nachrichten- oder Signalinformation enthalten.

Die Anordnung nach den Figuren 1 und 2 weist eine derart kontinuierlich zwischen zwei Schaltzuständen S1 und S2 umschaltbare Teilereinrichtung 20 auf, daß
- in einem der beiden Schaltzustände S1 und S2, beispielsweise im Schaltzustand S1,
- die der Teilereinrichtung 20 zugeführte optische Leistung P jedes Kanals λ1, λ2, ... bzw. λn im wesentlichen ungedämpft in einen der beiden Interfeometerarme 11 und 12, beispielsweise den Arm 11 eingekoppelt ist und der in den anderen Interferometerarm, im Beispiel der Arm 12, eingekoppelte Leistungsanteil P2 dieses Kanals λ1, λ2, ... bzw. λn im wesentlichen null ist, und
im anderen Schaltzustand, im Beispiel der Schaltzustand S2,
- die der Teilereinrichtung 20 zugeführte optische Leistung P jedes Kanals λ1, λ2, ... bzw. λn im wesentlichen ungedämpft in den anderen Interfeometerarm 12 eingekoppelt ist und der in den einen Interferometerarm 12 eingekoppelte Leistungsanteil P2 dieses Kanals λ1, λ2, ... bzw. λn im wesentlichen null ist, und daß
während des Umschaltens von einem Schaltzustand S1 oder S2 in den anderen Schaltzustand S2 bzw. S1
- die einem Arm 11 bzw. 12 im wesentlichen ungedämpft zum Einkoppeln zugeführte optische Leistung P jedes Kanals λ1, λ2, ... bzw. λn kontiuierlich auf im wesentlichen null gedämpft und gleichzeitig der dem anderen Arm 12 bzw. 11 zum Einkoppeln zugeführte und im wesentlichen null betragende Leistungsanteil P2 bzw. P1 jedes Kanals λ1, λ2, ... bzw. λn von im wesentlichen null auf die im wesentlichen ungedämpft zum Einkoppeln zugeführte optische Leistung P dieses Kanals λ1, λ2, ... bzw. λn gebracht wird,
und weist überdies eine derart kontinuierlich zwischen zwei Schaltzuständen S3 und S4 umschaltbare Überlagerungseinrichtung 30 auf, daß
- in einem dieser beiden Schaltzustände S3 und S4, beispielsweise dem Schaltzustand S3
- der aus einem der beiden Interferometerarme 11 und 12, beispielsweise dem Interferometerarm 11 ausgekoppelte Leistungsanteil P1 jedes Kanals λ1, λ2, ... bzw. λn der Überlagerungseinrichtung 30 im wesentlichen ungedämpft und der aus dem anderen Interferometerarm 12 ausgekoppelte Leistungsanteil P2 dieses Kanals λ1, λ2, ... bzw. λn im wesentlichen auf null gedämpft zugeführt ist und
- im anderen Schaltzustand, im Beispiel dem Schaltzustand S4,
- der aus dem einem Interferometerarm 11 ausgekoppelte Leistungsanteil P1 jedes Kanals λ1, λ2, ... bzw. λn der Überlagerungseinrichtung 30 im wesentlichen auf null gedämpft und der aus dem anderen Interferometerarm 12 ausgekoppelte Leistungsanteil P2 dieses Kanals λ1, λ2, ... bzw. λn im wesentlichen ungedämpft zugeführt ist, und daß
- während des Umschaltens von einem Schaltzustand S3 oder S4 in den anderen Schaltzustand S4 bzw. S3
- der aus einem Arm 11 bzw. 12 ausgekoppelte ungedämpfte Leistungsanteil P1 bzw. P2 kontinuierlich auf im wesentlichen null gedämpft und gleichzeitig der aus dem anderen Arm 12 bzw. 11 ausgekoppelte und auf null gedämpfte Leistungsanteil P2 bzw. P1 kontinuierlich auf seinen im wesentlichen ungedämpften Zustand angehoben wird.

Die Anordnung nach den Figuren 1 und 2 wird zur Durchführung eines Add/Drop-Verfahren im wesentlichen ohne Störung der Wellenlängenkanäle so betrieben, daß die umschaltbare Teilereinrichtung 20 in einen Schaltzustand geschaltet wird, bei dem die der Teilereinrichtung 20 zugeführte optische Leistung P jedes Kanals λ1, λ2, ... bzw. λn im wesentlichen ungedämpft in einen der beiden Interferometerarme eingekoppelt ist, so daß der in diesen Interferometerarm eingekoppelte Leistungsanteil im wesentlichen aus dieser optischen Leistung P besteht. Dieser eine Schaltzustand sei beispielsweise der Schaltzustand S1 und der eine Interferometerarm der Arm 11, in den die optische Leistung P als Leistungsanteil P1 eingekoppelt wird.

Zugleich wird die Überlagerungseinrichtung 30 in den Schaltzustand, bei dem der aus diesem einen Interferometerarm 11 ausgekoppelte Leistungsanteil P1 jedes Kanals λ1, λ2, ... bzw. λn der Überlagerungseinrichtung 30 im wesentlichen ungedämpft zugeführt ist, d. h. in den Schaltzustand S3 geschaltet, so daß der in Figur 1 gezeigte erste Schaltzustand S1 und S3 der Anordnung gegeben ist. Dieser erste Schaltzustand S1 und S3 ist beispielsweise nach Durchführung eines Add/Drop-Verfahrens mit Hilfe der Add/Drop-Einrichtung 110 bezüglich eines bestimmten Wellenlängenkanals λi, i = 1, 2, ... n gegeben.

In diesem ersten Schaltzustand S1 und S3 wird die der Teilereinrichtung 20 zugeführte optische Leistung P im wesentlichen nur über den einen Interferometerarm 11 der Überlagerungseinrichtung 30 zugeführt, während über den anderen Interferometerarm 12 im wesentlichen der Leistungsanteil P2 =0 übertragen wird. Aus der Überlagerungseinrichtung 30 kann somit im wesentlichen die der Teilereinrichtung 20 zugeführte optische Leistung P entnommen werden.

Bei diesem ersten Schaltzustand S1 und S3 wird die im anderen Interferometerarm 12 angeordnete Add/Drop-Einrichtung 120 auf einen von dem bestimmten Kanal λi verschiedenen ausgewählten Kanal λj eingestellt und mit dieser Add/Drop-Einrichtung 120 auf dem ausgewählten Kanal λj ein Add/Drop-Verfahren durchgeführt. Bei diesem Verfahren ist wegen des ersten Schaltzustandes S1 und S3 der vor dem Auskoppeln in die Überlagerungseinrichtung 30 dem anderen Interferometerarm 12 entnommene oder ausgekoppelte Leistungsanteil P2 im wesentlichen null und der dem ausgewählten Kanal λj hinzugefügte und in die Überlagerungseinrichtung 30 ausgekoppelte Leistungsanteil P2 gelangt nicht in die Überlagerungseinrichtung 30 da er im wesentlichen auf null gedämpft wird.

Danach werden die Teilereinrichtung 20 und die Überlagerungseinrichtung 30 gleichzeitig in den jeweils anderen Schaltzustand S2 bzw S4 geschaltet, so daß der in Figur 2 dargestellte zweite Schaltzustand S2 und S4 dieser Anordnung vorliegt, bei dem die der Teilereinrichtung 20 zugeführte optische Leistung P im wesentlichen nur über den anderen Interferometerarm 12 der Überlagerungseinrichtung 30 zugeführt wird, während über den einen Interferometerarm 11 im wesentlichen der Leistungsanteil P2 =0 übertragen wird. Aus der Überlagerungseinrichtung 30 kann somit wiederum im wesentlichen die der Teilereinrichtung 20 zugeführte optische Leistung P entnommen werden.

Während des Umschaltens der Teilereinrichtung 20 und Überlagerungseinrichtung 30 von einem Schaltzustand S1 und S2 oder in den jeweils anderen Schaltzustand S3 und S4 wird die Phasendifferenz-Erzeugungseinrichtung 40 so gesteuert, daß die in der Überlagerungseinrichtung 30 einander überlagerten Leistungsanteile P1 und P2 während des Umschaltens und danach konstruktiv miteinander interferieren.

Danach kann ein Add/Drop-Verfahren durch Einstellen der Add/Drop-Einrichtung 110 auf einen ausgewählten Kanal und nachfolgendes gleichzeitiges Umschalten der Teilereinrichtung 20 und Überlagerungseinrichtung 30 in den Schaltzustand S1 und S2 durchgeführt werden.

Wichtig ist, daß während jedes Umschaltens der Teilereinrichtung 20 und Überlagerungseinrichtung 30 von einem Schaltzustand S1 und S2 oder S3 und S4 in den jeweils anderen Schaltzustand S3 und S4 bzw. S1 und S2 wird die Phasendifferenz-Erzeugungseinrichtung 40 so gesteuert, daß die in der Überlagerungseinrichtung 30 einander überlagerten Leistungsanteile P1 und P2 während des Umschaltens und danach konstruktiv miteinander interferieren.

Bei dieser Durchführung eines Add/Drop-Verfahrens werden die Kanäle im wesentlichen ungestört gelassen. Lediglich während eines Umschaltens der Teilereinrichtung 20 und Überlagerungseinrichtung 30 in einen anderen Schaltzustand werden nur der bestimmte alte Kanal und der ausgewählte neue Kanal gestört, ohne daß dabei die Kommunikation unterbrochen wird.

Die in Figur 3 dargestellte Anordnung weist eine Teilereinrichtung 20 zum Aufteilen optischen Leistung P jedes Kanals λ1, λ2, ... bzw. λn in zwei im wesentlichen gleich große feste Leistungsanteile P1 und P2 dieses Kanals λ1, λ2, ... bzw. λn auf, deren einer, beispielsweise der Leistungsanteil P1, in einen Interferometerarm, beispielsweise den Arm 11 eingekoppelt ist, und deren andere Leistungsanteil, im Beispiel der Leistungsanteil P2, in den anderen Interferometerarm, im Beispiel den Arm 12 eingekoppelt ist. Der Überlagerungseinrichtung 30 sind bei dieser Anordnung die aus den beiden Interferometerarmen 11 und 12 ausgekoppelden Leistungsanteile P1 und P2 jedes Kanals λ1, λ2, ... bzw. λn jeweils im wesentlichen ungedämpft zugeführt.

Eine umchaltbare Teilereinrichtung 20 und umschaltbare Überlagerungseinrichtung kann jeweils durch einen optischen Richtkoppler realisiert werden.

Die Anordnung nach Figur 3 ist im Vergleich zur Anordnung nach den Figuren 1 und 2 baulich einfacher, da die Teilereinrichtung 20 und Überlagerungseinrichtung 30 nicht schaltbar sein müssen und einfacher realisiert werden können.

Die Anordnung nach Figur 3 wird zur Durchführung eines Add/Drop-Verfahrens so betrieben, daß eine Add/Drop-Einrichtung, beispielsweise die Add/Drop-Einrichtung 110, von einem bestimmten Kanal λi, auf den sie eingestellt war, auf einen ausgewählten Kanal λj eingestellt und mit dieser Add/Drop-Einrichtung 110 auf dem ausgewählten Kanal λj ein Add/Drop-Verfahren durchgeführt wird, und daß danach die andere Add/Drop-Einrichtung, im Beispiel die Add/Drop-Einrichtung 120, von dem bestimmten Kanal λi, auf den sie eingestellt war, auf den ausgewählten Kanal λj eingestellt und mit dieser anderen Add/Drop-Einrichtung 120 auf diesem bestimmten Kanal λj ein Add/Drop-Verfahren durchgeführt wird.

Während dieses Einstellens der Add/Drop-Einrichtungen 110 und 120 werden jeweils der bestimmte Kanal λi, der ausgewählte Kanal λj und alle zwischen diesen beiden Kanälen liegenden Kanäle zeitweilig derart gestört, daß die optische Leistung P dieser Kanäle zeitweilig um 3dB gedämpft wird. Die Kommunikation wird in keinem Fall unterbrochen.

Danach kann wieder ein Add/Drop-Verfahren durch aufeinanderfolgendes Einstellen der Add/Drop-Einrichtungen 110 und 120 auf einen neuen ausgewählten Kanal durchgeführt werden.

In der Figur 3 ist eine Steuereinrichtung 50 zur Steuerung des Add/Drop-Verfahrens angedeutet. Eine derartige Steuereinrichtung ist auch einer Anordnung nach den Figuren 1 und 2 vorgesehen. In der Figur 3 stehen A1 und A2 jeweils für Add und D1 und D2 jeweils für Drop.

Eine Add/Drop-Einrichtung 110 bzw. 120 kann generell als hybride Einrichtung, die aus einzelnen, beispielsweise mit Faserschwänzen versehenen Komponenten besteht, oder als integrierte optische Schaltung realisiert werden.

Für integrierte optische Netzwerke kommen in Betracht: LiNbO₃ für akustooptische Filter insbesondere als Add/Drop-Einrichtung, elektrooptische Schalter und Phasenschieber mit einer Abstimm- bzw. Einstellgeschwindigkeit im Mikrosekundenbereich und elektrooptische Filter insbesondere als Add/Drop-Einrichtung, elektrooptische Schalter und elektrooptische Phasenschieber, Glas, beispielsweise Quarzglas auf Silizium und Ionenaustausch, Polymere für thermooptische Filter insbesondere als Add/Drop-Einrichtung, thermooptische Schalter und Phasenschieber und Komponenten, die auf Ladungsträgerinjektion in InGaAsP/P und GaAlAs/GaAs basieren.

Das Einstellen einer Add/Drop-Einrichtung auf einen jeweils neuen ausgewählten Kanal kann beispielsweise durch eine Adresse erfolgen, die beispielsweise durch einen auf der optischen Leistung eines Kanals modulierten Ton spezifiziert ist.

## Patentansprüche

1. Anordnung zur Durchführung eines Add/Drop-Verfahrens bei auf verschiedenen optischen Wellenlängenkanälen (λ1 bis λn) im Wellenlängenmultiplex übertragenen optischen Leistungen (P), bei welchem Verfahren die auf jedem Wellenlängenkanal (λ1, λ2, ... bzw. λn) übertragene optische Leistung aus diesem Kanal (λ1, λ2, ... λn) im wesentlichen entfernbar und dieser Kanal (λ1, λ2, ... λn) mit einer auf ihm zu übertragenden optischen Leistung (P) belegbar ist,
**gekennzeichnet durch**
eine optische Interferometereinrichtung (10), bestehend aus einer optischen Teilereinrichtung (20), zwei Interferometerarmen (11, 12) und einer optischen Überlagerungseinrichtung (30),
wobei
die Teilereinrichtung (20) die auf den verschiedenen Wellenlängenkanälen (λ1 bis λn) übertragenen optischen Leistungen (P) empfängt und von der empfangenen optische Leistung (P) jedes Kanals (λ1, λ2, ... bzw. λn) zwei Leistungsanteile (P1, P2) erzeugt,
wobei
ein Leistungsanteil (P1, P2) der optischen Leistung (P) jedes Kanals (λ1, λ2, ... bzw. λn) in einen Interferometerarm (11, 12) eingekoppelbar, auf diesem einen Arm (11, 12) übertragbar und aus diesem Arm (11, 12) ausgekoppelbar ist und
der andere Leistungsanteil (P2, P1) der optischen Leistung (P) jedes Kanals (λ1, λ2, ... bzw. λn) in den anderen Interferometerarm (12, 11) eingekoppelbar, auf diesem anderen Arm (12, 11) übertragbar und aus diesem anderen Arm (12, 11) ausgekoppelbar ist,
und wobei
in der Überlagerungseinrichtung (30) aus den Interferometerarmen (11, 12) ausgekoppelte Leistungsanteile (P1, P2) einander überlagert werden,
eine Add/Drop-Einrichtung (110, 120), die
in dem einen Interferometerarm (11, 12) angeordnet ist und
wahlweise auf jeden der Wellenlängenkanäle (λ1 bis λn) einstellbar ist und mit welcher
der auf diesem einen Arm (11, 12) und dem eingestellten Kanal (λ1, λ2, ... bzw. λn) übertragene eine Leistungsanteil (P1, P2) vor dessen Auskopplung aus diesem Arm (11, 12) im wesentlichen aus diesem Arm (11, 12) entfernbar ist und
ein Leistungsanteil (P1, P2) einer auf diesem eingestellten Kanal (λ1, λ2, ... bzw. λn) zu übertragenden optischen Leistung (P) in diesen einen Arm (11, 12) einkoppelbar, auf diesem Arm (11, 12) übertragbar und aus diesem Arm (11, 12) in die Überlagerungseinrichtung (30) auskoppelbar ist,
eine Add/Drop-Einrichtung (120, 110), die
im anderen Interferometerarm (12, 11) angeordnet ist und
wahlweise auf jeden der Wellenlängenkanäle (λ1 bis λn) einstellbar ist und mit welcher
der auf diesem anderen Arm (12, 11) und dem eingestellten Kanal (λ1, λ2, ... bzw. λn) übertragene Leistungsanteil (P2, P1) vor dessen Auskopplung im wesentlichen aus diesem anderen Arm (12, 11) entfernbar ist und
ein Leistungsanteil (P2, P1) einer auf diesem eingestellten Kanal (λ1, λ2, ... bzw. λn) zu übertragenden optischen Leistung (P) in diesen anderen Arm (12, 11) einkoppelbar, auf diesem anderen Arm (12, 11) übertragbar und aus diesem anderen Arm (12, 11) in die Überlagerungseinrichtung (30) auskoppelbar ist,
und
eine Phasendifferenz-Erzeugungseinrichtung (40), die
eine Phasendifferenz Δϕ zwischen
dem aus dem einen Interferometerarm (11, 12) in die Überlagerungseinrichtung (30) auszukoppelnden Leistungsanteil (P1, P2) eines Kanals (λ1, λ2, ... bzw. λn) und
dem aus dem anderen Interferometerarm (12, 11) in die Überlagerungseinrichtung (30) auszukoppelnden Leistungsanteil (P2, P1) dieses Kanals (λ1, λ2, ... bzw. λn) derart erzeugt, daß
die in der Überlagerungseinrichtung (30) einander überlagerten Leistungsanteile (P1, P2) konstruktiv miteinander interferieren.

2. Anordnung nach Anspruch 1, **gekennzeichnet durch** eine steuerbare Phasendifferenz-Erzeugungseinrichtung (40), die eine kontinuierlich einstellbare Phasendifferenz (Δϕ) zwischen einem aus dem einen Interferometerarm (11, 12) in die Überlagerungseinrichtung (30) ausgekoppelten Leistungsanteil (P1, P2) und einem aus dem anderen Interferometerarm (12, 11) in die Überlagerungseinrichtung (30) ausgekoppelten Leistungsanteil (P1, P2) aufweist.

3. Anordnung nach Anspruch 2, **gekennzeichnet durch**
- eine derart kontinuierlich zwischen zwei Schaltzuständen (S1, S2) umschaltbare Teilereinrichtung (20), daß
- in einem Schaltzustand (S1, S2) die der Teilereinrichtung (20) zugeführte optische Leistung (P) jedes Kanals (λ1, λ2, ... bzw. λn) im wesentlichen ungedämpft in einen Interfeometerarm (11, 12) eingekoppelt ist und der in den anderen Interferometerarm (12, 11) eingekoppelte Leistungsanteil (P2, P1) dieses Kanals (λ1, λ2, ... bzw. λn) im wesentlichen null ist, und
- im anderen Schaltzustand (S2, S1) die der Teilereinrichtung (20) zugeführte optische Leistung (P) jedes Kanals (λ1, λ2, ... bzw. λn) im wesentlichen ungedämpft in den anderen Interfeometerarm (12, 11) eingekoppelt ist und der in den einen Interferometerarm (11, 12) eingekoppelte Leistungsanteil (P1, P2) dieses Kanals (λ1, λ2, ... bzw. λn) im wesentlichen null ist, und daß
- während des Umschaltens von einem Schaltzustand (S1, S2) in den anderen (S2, S1) die einem Arm (11, 12) im wesentlichen ungedämpft zum Einkoppeln zugeführte optische Leistung (P) jedes Kanals (λ1, λ2, ... bzw. λn) kontiuierlich auf im wesentlichen null gedämpft und gleichzeitig der dem anderen Arm (12, 11) zum Einkoppeln zugeführte und im wesentlichen null betragende Leistungsanteil (P2, P1) jedes Kanals (λ1, λ2, ... bzw. λn) von im wesentlichen null auf die im wesentlichen ungedämpfte zum Einkoppeln zugeführte optische Leistung (P) dieses Kanals (12, 11) gebracht wird,
und
- eine derart kontinuierlich zwischen zwei Schaltzuständen (S3, S4) umschaltbare Überlagerungseinrichtung (30), daß
- in einem Schaltzustand (S3, S4) der aus einem Interferometerarm (11, 12) ausgekoppelte Leistungsanteil (P1, P2) jedes Kanals (λ1, λ2, ... bzw. λn) der Überlagerungseinrichtung (30) im wesentlichen ungedämpft und der aus dem anderen Interferometerarm (12, 11) ausgekoppelte Leistungsanteil (P2, P1) dieses Kanals (λ1, λ2, ... bzw. λn) im wesentlichen auf null gedämpft zugeführt ist und
- im anderen Schaltzustand (S4, S3) der aus dem einem Interferometerarm (11, 12) ausgekoppelte Leistungsanteil (P1, P2) jedes Kanals (λ1, λ2, ... bzw. λn) der Überlagerungseinrichtung (30) im wesentlichen auf null gedämpft und der aus dem anderen Interferometerarm (12, 11) ausgekoppelte Leistungsanteil (P2, P1) dieses Kanals (λ1, λ2, ... bzw. λn) im wesentlichen ungedämpft zugeführt ist, und daß
- während des Umschaltens von einem Schaltzustand (S3, S4) in den anderen (S4, S3) der aus einem Arm (11, 12) ausgekoppelte ungedämpfte Leistungsanteil (P1, P2) kontinuierlich auf im wesentlichen null gedämpft und gleichzeitig der aus dem anderen Arm (12, 11) ausgekoppelte und auf null gedämpfte Leistungsanteil (P2, P1) kontinuierlich auf seinen im wesentlichen ungedämpften Zustand angehoben wird.

4. Anordnung nach Anspruch 1 oder 2,
**gekennzeichnet durch**
eine Teilereinrichtung (20) zum Aufteilen optischen Leistung (P) jedes Kanals (λ1, λ2, ... bzw. λn) in zwei im wesentlichen gleich große feste Leistungsanteile (P1, P2) dieses Kanals (λ1, λ2, ... bzw. λn), deren einer (P1, P2) in einen Interferometerarm (11, 12) und andere (P2, P1) in den anderen Interferometerarm (12, 11) eingekoppelt ist, und eine Überlagerungseinrichtung (30) der die aus den beiden Interferometerarmen (11, 12) ausgekoppelden Leistungsanteile (P1, P2) jedes Kanals (λ1, λ2, ... bzw. λn) jeweils im wesentlichen ungedämpft zugeführt sind.

5. Verfahren zum Betrieb einer Anordnung nach einem der Ansprüche 1,2 oder 3,
**dadurch gekennzeichnet, daß**
- die Teilereinrichtung (20) in einen Schaltzustand (S1, S2), bei dem die der Teilereinrichtung (20) zugeführte optische Leistung (P) jedes Kanals (λ1, λ2, ... bzw. λn) im wesentlichen ungedämpft in einen der beiden Interferometerarme (11, 12) eingekoppelt ist, und
- die Überlagerungseinrichtung (30) in den Schaltzustand (S3, S4), bei dem der aus diesem einen Interferometerarm (11, 12) ausgekoppelte Leistungsanteil (P1, P2) jedes Kanals (λ1, λ2, ... bzw. λn) der Überlagerungseinrichtung (30) im wesentlichen ungedämpft zugeführt ist,
geschaltet werden, daß
- die im anderen Interferometerarm (12, 11) angeordnete Add/Drop-Einrichtung (110, 120) auf einen ausgewählten Kanal (λj) eingestellt und mit dieser Add/Drop-Einrichtung (110, 120) auf dem ausgewählten Kanal (λj) ein Add/Drop-Verfahren durchgeführt wird, daß danach
- die Teilereinrichtung (20) und die Überlagerungseinrichtung (30) gleichzeitig in den jeweils anderen Schaltzustand (S2, S1; S4, S3) geschaltet werden, und daß
- während jedes Umschaltens der Teilereinrichtung (20) und Überlagerungseinrichtung (30) von einem Schaltzustand (S1, S2; S3, S4) in den jeweils anderen (S2, S1; S4, S3) die Phasendifferenz-Erzeugungseinrichtung (40) so gesteuert wird, daß die in der Überlagerungseinrichtung (30) einander überlagerten Leistungsanteile (P1, P2) während des Umschaltens und danach konstruktiv miteinander interferieren.

6. Verfahren zum Betrieb einer Anordnung nach Anspruch 4, **dadurch gekennzeichnet, daß** eine Add/Drop-Einrichtung (110, 120) auf einen ausgewählten Kanal (λj) eingestellt und mit dieser Add/Drop-Einrichtung (110, 120) auf dem ausgewählten Kanal (λj) ein Add/Drop-Verfahren durchgeführt wird und daß danach die andere Add/Drop-Einrichtung (120, 110) auf den ausgewählten Kanal (λj) eingestellt und mit dieser anderen Add/Drop-Einrichtung (120, 110) auf diesem bestimmten Kanal (λj) ein Add/Drop-Verfahren durchgeführt wird.

## Claims

1. Arrangement for carrying out an add/drop method with optical powers (P) being transmitted in wavelength division multiplex on different optical wavelength channels (λ1 to λn), in which method the optical power being transmitted on each wavelength channel (λ1, λ2, ... or λn) can essentially be removed from this channel (λ1, λ2, ... λn) and this channel (λ1, λ2, ... λn) can be provided with an optical power (P) to be transmitted on it,
**characterized by**
an optical interferometer device (10), consisting of an optical splitter device (20), two interferometer branches (11, 12) and an optical superposition device (30),
wherein
the splitter device (20) receives the optical powers (P) being transmitted on the various wavelength channels (λ1 to λn) and produces two power components (P1, P2) from the received optical power (P) of each channel (λ1, λ2, ... or λn),
wherein
one power component (P1, P2) of the optical power (P) of each channel (λ1, λ2, ... or λn) can be injected into one interferometer branch (11, 12), transmitted on this one branch (11, 12) and extracted from this branch (11, 12) and
the other power component (P2, P1) of the optical power (P) of each channel (λ1, λ2, ... or λn) can be injected into the other interferometer branch (12, 11), transmitted on this other branch (12, 11) and extracted from this other branch (12, 11), and
wherein
power components (P1, P2) extracted from the interferometer branches (11, 12) are mutually superposed in the superposition device (30), an add/drop device (110, 120), which
is arranged in the one interferometer branch (11, 12) and
can selectively be adjusted to each of the wavelength channels (λ1 to λn) and by which
the one power component (P1, P2) being transmitted on this one branch (11, 12) and the adjusted channel (λ1, λ2, ... or λn) can be essentially removed from this branch (11, 12) before it is extracted from this branch (11, 12) and
a power component (P1, P2) of an optical power (P) to be transmitted on this adjusted channel (λ1, λ2, ... or λn) can be injected into this one branch (11, 12), transmitted on this branch (11, 12) and extracted from this branch (11, 12) into the superposition device (30),
an add/drop device (120, 110), which
is arranged in the other interferometer branch (12, 11) and
can selectively be adjusted to each of the wavelength channels (λ1 to λn) and by which
the power component (P2, P1) being transmitted on this other branch (12, 11) and the adjusted channel (λ1, λ2, ... or λn) can be essentially removed from this other branch (12, 11) before it is extracted from this other branch (12, 11) and
a power component (P2, P1) of an optical power (P) to be transmitted on this adjusted channel (λ1, λ2, ... or λn) can be injected into this other branch (12, 11), transmitted on this other branch (12, 11) and extracted from this other branch (12, 11) into the superposition device (30),
and
a phase difference generation device (40), which
generates a phase difference Δϕ between
the power component (P1, P2) of a channel (λ1, λ2, ... or λn), which is to be extracted from the one interferometer branch (11, 12) into the superposition device (30) and
the power component (P2, P1) of this channel (λ1, λ2, ... or λn), which is to be extracted from the other interferometer branch (12, 11) into the superposition device (30), in such a way that
the power components (P1, P2) mutually superposed in the superposition device (30) constructively interfere with each other.

2. Arrangement according to Claim 1, **characterized by** a controllable phase difference generation device (40) which has a continuously adjustable phase difference Δϕ between a power component (P1, P2) to be extracted from the one interferometer branch (11, 12) into the superposition device (30) and a power component (P2, P1) to be extracted from the other interferometer branch (12, 11) into the superposition device (30).

3. Arrangement according to Claim 2, **characterized by**
- a splitter device (20) which can be switched over continuously between two switching states (S1, S1) in such a way that
- in one switching state (S1, S2) the optical power (P) delivered to the splitter device (20) from each channel (λ1, λ2, ... or λn) is injected essentially unattenuated into one interferometer branch (11, 12) and the power component (P2, P1) injected from this channel (λ1, λ2, ... or λn) into the other interferometer branch (12, 11) is essentially zero, and
- in the other switching state (S2, S1) the optical power (P) delivered to the splitter device (20) from each channel (λ1, λ2, ... or λn) is injected essentially unattenuated into the other interferometer branch (12, 11) and the power component (P2, P1) injected from this channel (λ1, λ2, ... or λn) into the one interferometer branch (11, 12) is essentially zero, and such that
- during the switchover from one switching state (S1, S2) to the other (S2, S1) the optical power (P) delivered essentially unattenuated from each channel (λ1, λ2, ... or λn) to one branch (11, 12) for injection is attenuated continuously to essentially zero and at the same time the essentially zero power component (P2, P1) delivered from each channel (λ1, λ2, ... or λn) to the other branch (12, 11) for injection is brought from essentially zero to the optical power (P) of this channel (12, 11) delivered essentially unattenuated for injection, and
- a superposition device (30) which can be switched over continuously between two switching states (S3, S4) in such a way that
- in one switching state (S3, S4) the power component (P1, P2) which is extracted from one interferometer branch (11, 12) for each channel (λ1, λ2, ... or λn) is delivered essentially unattenuated to the superposition device (30) and the power component (P2, P1) which is extracted from the other interferometer branch (12, 11) for this channel (λ1, λ2, ... or λn) is delivered essentially attenuated to zero and
- in the other switching state (S4, S3) the power component (P1, P2) which is extracted from one interferometer branch (11, 12) for each channel (λ1, λ2, ... or λn) is delivered essentially attenuated to zero to the superposition device (30) and at the same time the power component (P2, P1) which is extracted from the other interferometer branch (12, 11) for this channel (λ1, λ2, ... or λn) is delivered essentially unattenuated, and such that
- during the switchover from one switching state (S3, S4) to the other (S4, S3) the power component (P1, P2) extracted unattenuated from one branch (11, 12) is attenuated continuously to zero and at the same time the power component (P2, P1) extracted from the other branch (12, 11) and attenuated to zero is continuously increased to its essentially unattenuated state.

4. Arrangement according to Claim 1 or 2, **characterized by**
a splitter device (20) for splitting optical power (P) of each channel (λ1, λ2, ... or λn) into two essentially equal-sized fixed power components (P1, P2) of this channel (λ1, λ2, ... or λn), of which one (P1, P2) is injected into one interferometer branch (11, 12) and the other (P2, P1) is injected into the other interferometer branch (12, 11), and a superposition device (30) to which the power components (P1, P2) extracted from the two interferometer branches (11, 12) for each channel (λ1, λ2, ... or λn) are in each case delivered essentially unattenuated.

5. Method for operating an arrangement according to one of Claims 1, 2 and 3,
**characterized in that**
- the splitter device (20) is switched to a switching state (S1, S2) in which the optical power (P) delivered to the splitter device (20) from each channel (λ1, λ2, ... or λn) is injected essentially unattenuated into one of the two interferometer branches (11, 12), and
- the superposition device (30) is switched to the switching state (S3, S4) in which the power component (P1, P2) extracted from this one interferometer branch (11, 12) for each channel (λ1, λ2, ... or λn) is delivered essentially unattenuated to the superposition device (30), **in that**
- the add/drop device (110, 120) arranged in the other interferometer branch (12, 11) is adjusted to a selected channel (λj) and an add/drop method is carried out on the selected channel (λj) by using this add/drop device (110, 120), **in that**
- the splitter device (20) and the superposition device (30) are then simultaneously switched to the other respective switching state (S2, S2; S4, S3), and **in that**
- during each switchover of the splitter device (20) and the superposition device (30) from one switching state (S1, S2; S3, S4) to the other respective switching state (S2, S1; S4, S3) the phase difference generation device (40) is controlled in such a way that the power components (P1, P2) mutually superposed in the superposition device (30) constructively interfere with each other during the switchover and thereafter.

6. Method for operating an arrangement according to Claim 4, **characterized in that** one add/drop device (110, 120) is adjusted to a selected channel (λj) and an add/drop method is carried out on the selected channel (λj) by using this add/drop device (110, 120) and **in that** the other add/drop device (120, 110) is then adjusted to the selected channel (λj) and an add/drop method is carried out on this particular channel (λj) by using this other add/drop device (120, 110).

## Revendications

1. Dispositif de mise en oeuvre d'un procédé Add / Drop pour des puissances optiques (P) transmises en multiplexage par répartition de longueur d'onde sur différents canaux optiques de longueur d'onde (λ1 à λn), procédé dans lequel la puissance optique transmise sur chaque canal de longueur d'onde (λ1, λ2, ... ou λn) peut être extraite globalement de ce canal (λ1, λ2, ... ou λn) et ce canal (λ1, λ2, ... ou λn) peut être occupé avec une puissance optique (P) qui est à transmettre sur lui,
**caractérisé par**
un interféromètre optique (10), constitué
d'un dispositif de séparation optique (20),
de deux branches d'interféromètre (11, 12), et
d'un dispositif de superposition optique (30),
le dispositif de séparation (20) recevant les puissances optiques (P) transmises sur les différents canaux de longueur d'onde (λ1 à λn) et produisant à partir de la puissance optique reçue (P) de chaque canal (λ1, λ2, ... ou λn) deux composantes de puissance (P1, P2),
une composante de puissance (P1, P2) de la puissance optique (P) de chaque canal (λ1, λ2, ... ou λn) pouvant être introduite dans une branche d'interféromètre (11, 12), être transmise sur cette branche (11, 12) et être sortie de cette branche (11, 12),
l'autre composante de puissance (P2, P1) de la puissa optique (P) de chaque canal (λ1, λ2, ... ou λn) pouvant être introduite dans l'autre branche d'interféromètre (12, 11 ), être transmise sur cette autre branche (12, 11) et être sortie de cette autre branche (12, 11), et
dans le dispositif de superposition (30), des composantes de puissance (P1, P2) sorties des branches d'interféromètre (11, 12) étant superposées l'une à l'autre,
un dispositif Add / Drop (110, 120)
qui est placé dans une branche d'interféromètre (11, 12), et
qui est réglable au choix sur chacun des canaux de longueur d'onde (λ1 à λn)
et avec lequel une composante de puissance (P1, P2) transmise sur cette branche (11, 12) et sur le canal réglé (λ1, λ2, ... ou λn) peut être extraite globalement de cette branche (11, 12) avant sa sortie de cette branche (11, 12), et
une composante de puissance (P1, P2) d'une puissance optique (P) à transmettre sur ce canal réglé (λ1, λ2, ... ou λn) peut être introduite dans cette branche (11, 12), être transmise sur cette branche (11, 12) et être sortie de cette branche (11, 12) pour aller dans le dispositif de superposition (30),
un dispositif Add / Drop (120, 110),
qui est placé dans l'autre branche d'interféromètre (12, 11), et
qui est réglable au choix sur chacun des canaux de longueur d'onde (λ1 à λn),
et avec lequel la composante de puissance (P2, P1) transmise sur cette autre branche (12, 11) et sur le canal réglé (λ1, λ2, ... ou λn) peut être extraite globalement de cette autre branche (12, 11) avant sa sortie de cette autre branche (12, 11), et
une composante de puissance (P2, P1) d'une puissance optique (P) à transmettre sur ce canal réglé (λ1, λ2, ... ou λn) peut être introduite dans cette autre branche (12, 11), être transmise sur cette autre branche (12, 11 ) et être sortie de cette autre branche (12, 11) pour aller dans le dispositif de superposition (30), et
un dispositif générateur de déphasage (40),
qui produit un déphasage Δϕ entre
la composante de puissance (P1, P2) d'un canal (λ1, λ2, ... ou λn), laquelle doit être sortie de la branche d'interféromètre (11, 12) pour aller dans le dispositif de superposition (30), et
l'autre composante de puissance (P2, P1) de ce canal (λ1, λ2, ... ou λn), laquelle doit être sortie de l'autre branche d'interféromètre (12, 11) pour aller dans le dispositif de superposition (30),
de telle sorte que les composantes de puissance (P1, P2) superposées l'une à l'autre dans le dispositif de superposition (30) interfèrent entre elles de manière constructive.

2. Dispositif selon la revendication 1, **caractérisé par** un dispositif générateur de déphasage (40) commandable qui présente un déphasage Δϕ réglable en continu entre une composante de puissance (P1, P2) sortie de la branche d'interféromètre (11, 12) pour aller dans le dispositif de superposition (30) et une composante de puissance (P1, P2) sortie de l'autre branche d'interféromètre (12, 11) pour aller dans le dispositif de superposition (30).

3. Dispositif selon la revendication 2, **caractérisé par**
- un dispositif de séparation (20) commutable de façon continue entre deux états de commutation (S1, S2) de telle sorte que
- dans un état de commutation (S1, S2), la puissance optique (P) de chaque canal (λ1, λ2, ... ou λn) qui est envoyée au dispositif de séparation (20) est introduite sensiblement sans être affaiblie dans une branche d'interféromètre (11, 12) et la composante de puissance (P2, P1) de ce canal (λ1, λ2, ... ou λn) qui est introduite dans l'autre branche d'interféromètre (12, 11) est sensiblement nulle, et
- dans l'autre état de commutation (S2, S1), la puissance optique (P) de chaque canal (λ1, λ2, ... ou λn) qui est envoyée au dispositif de séparation (20) est introduite sensiblement sans être affaiblie dans l'autre branche d'interféromètre (12, 11) et la composante de puissance (P1, P2) de ce canal (λ1, λ2, ... ou λn) qui est introduite dans la branche d'interféromètre (11, 12) est sensiblement nulle, et
- pendant la commutation d'un état de commutation (S1, S2) à l'autre (S2, S1), la puissance optique (P) de chaque canal (λ1, λ2, ... ou λn) qui est envoyée sensiblement non affaiblie à une branche (11, 12) pour y être introduite est affaiblie de façon continue sensiblement à zéro et simultanément la composante de puissance (P2, P1) de chaque canal (λ1, λ2, ... ou λn) qui est envoyée à l'autre branche (12, 11) pour y être introduite et qui vaut sensiblement zéro est amenée de zéro environ à la puissance optique (P) de ce canal ((λ1, λ2, ... ou λn) qui est envoyée sensiblement non affaiblie pour être introduite, et
- un dispositif de superposition (30) commutable de façon continue entre deux états de commutation (S3, S4) de telle sorte que
- dans un état de commutation (S3, S4), la composante de puissance (P1, P2) de chaque canal (λ1, λ2, ... ou λn) qui est sortie d'une branche d'interféromètre (11, 12) est envoyée sensiblement non affaiblie au dispositif de superposition (30) et la composante de puissance (P2, P1) de ce canal (λ1, λ2, ... ou λn) qui est sortie de l'autre branche d'interféromètre (12, 11) est envoyée affaiblie sensiblement à zéro, et
- dans l'autre état de commutation (S4, S3), la composante de puissance (P1, P2) de chaque canal (λ1, λ2, ... ou λn) qui est sortie de la branche d'interféromètre (11, 12) est envoyée affaiblie sensiblement à zéro au dispositif de superposition (30) et la composante de puissance (P2, P1) de ce canal (λ1, λ2, ... ou λn) qui est sortie de l'autre branche d'interféromètre (12, 11) est envoyée sensiblement non affaiblie, et
- pendant la commutation d'un état de commutation (S3, S4) à l'autre (S4, S3), la composante de puissance (P1, P2) non affaiblie sortie d'une branche (11, 12) est affaiblie de façon continue sensiblement à zéro et simultanément la composante de puissance (P2, P1) sortie de l'autre branche (12, 11) et affaiblie à zéro est amenée de façon continue à son état sensiblement non affaibli.

4. Dispositif selon la revendication 1 ou 2, **caractérisé par** un dispositif de séparation (20) pour la séparation d'une puissance optique (P) de chaque canal (λ1, λ2, ... ou λn) en deux composantes de puissance (P1, P2) de ce canal (λ1, λ2, ... ou λn) qui sont fixes et sensiblement de même grandeur, l'une de ces composantes de puissance (P1, P2) étant introduite dans une branche d'interféromètre (11, 12) et l'autre composante de puissance (P2, P1) étant introduite dans l'autre branche d'interféromètre (12, 11), et un dispositif de superposition (30) auquel sont envoyées, chacune sensiblement non affaiblie, les composantes de puissance (P1, P2) de chaque canal (λ1, λ2, ... ou λn) qui sont sorties des deux branches d'interféromètre (11, 12).

5. Procédé d'exploitation d'un dispositif selon l'une des revendications 1, 2 ou 3, **caractérisé par le fait que**
- on met le dispositif de séparation (20) dans un état de commutation (S1, S2) dans lequel la puissance optique (P) de chaque canal (λ1, λ2, ... ou λn) qui est envoyée au dispositif de séparation (20) est introduite sensiblement non affaiblie dans l'une des deux branches d'interféromètre (11, 12), et
- on met le dispositif de superposition (30) dans l'état de commutation (S3, S4) dans lequel la composante de puissance (P1, P2) de chaque canal (λ1, λ2, ... ou λn) qui est sortie de cette branche d'interféromètre (11, 12) est envoyée sensiblement non affaiblie au dispositif de superposition (30),
- on règle le dispositif Add / Drop (110, 120) placé dans l'autre branche d'interféromètre (12, 11) sur un canal sélectionné (λj) et on réalise un procédé Add / Drop avec ce dispositif Add / Drop (110, 120) sur ce canal sélectionné (λj),
- puis on met le dispositif de séparation (20) et le dispositif de superposition (30) simultanément dans l'autre état de commutation respectif (S2, S1 ; S4, S3), et
- pendant chaque commutation du dispositif de séparation (20) et du dispositif de superposition (30) d'un état de commutation (S1, S2 ; S3, S4) à l'autre (S2, S1 ; S4, S3), on commande le dispositif générateur de déphasage (40) de telle sorte que les composantes de puissance (P1, P2) superposées l'une à l'autre dans le dispositif de superposition (30) interfèrent entre elles de manière constructive pendant la commutation et après.

6. Procédé d'exploitation d'un dispositif selon la revendication 4, **caractérisé par le fait que**
on règle un dispositif Add / Drop (110, 120) sur un canal sélectionné (λj) et on réalise un procédé Add / Drop avec ce dispositif Add / Drop (110, 120) sur le canal sélectionné (λj)
puis on règle l'autre dispositif Add / Drop (120, 110) sur le canal sélectionné (λj) et on réalise un procédé Add / Drop avec cet autre dispositif Add / Drop (120, 110) sur le canal sélectionné (λj).
